Europäisches Patentamt

European Patent Office

Office européen des brevets

(19)

(11) Publication number: **0 140 658**
**B1**

## EUROPEAN PATENT SPECIFICATION

(12)

(45) Date of publication of patent specification: **07.01.88**

(51) Int. Cl.⁴: **B 41 J 3/04**, B 41 J 27/00

(21) Application number: **84307206.7**

(22) Date of filing: **19.10.84**

(54) Ink dot printer.

(30) Priority: **26.10.83 JP 200462/83**

(43) Date of publication of application:
**08.05.85 Bulletin 85/19**

(45) Publication of the grant of the patent:
**07.01.88 Bulletin 88/01**

(84) Designated Contracting States:
**DE FR GB IT**

(56) References cited:
**EP-A-0 121 242**

**PATENTS ABSTRACTS OF JAPAN, vol. 5, no.
80 (M-70)752r, 26th May 1981**

**PATENTS ABSTRACTS OF JAPAN, vol. 3, no.
26 (E-95), 6th March 1979, page 33 E 95**

**IBM TECHNICAL DISCLOSURE BULLETIN, vol.
18, no. 9, February 1976, page 2761, New York,
US; D.P. DARWIN et al.: "Magnetic method of
inking print wires"**

(73) Proprietor: **TOKYO ELECTRIC CO. LTD.
2-6-13 Nakameguro Meguro
Tokyo (JP)**

(72) Inventor: **Nakayama, Tetsuro
3-36 Tomita-cho
Mishima Shizuoka (JP)**
Inventor: **Kimura, Tsutomu
1629-18 Tsukanodai Yata
Mishima Shizuoka (JP)**

(74) Representative: **Evans, David Charles et al
F.J. CLEVELAND & COMPANY 40-43, Chancery
Lane
London, WC2A 1JQ (GB)**

Courier Press, Leamington Spa, England.

# Description

This invention relates to an ink dot printer wherein ink applied to ends of a plurality of needles is selectively flown to form dots of ink in order to print a character and so on with a combination of such ink dots.

The present invention seeks to make use of an electrostatic force for printing without any contact of ends of needles with record paper, to allow ink dots to be printed with a low energy, to facilitate treatment for insulation of needles, to reduce printer operating noise, and to make use of (magnetic) ink to improve the supply of ink to ends of needles.

In Japanese Laid Open No. 28867/1981 there is described an ink dot printer comprising a plurality of needles, driving means for selectively acting upon each of said needles, and an electrode located in opposed relationship to the ends of said needles, and adapted to be overlaid by a record sheet, said electrode being charged to attract (magnetized) ink particles from said needles to said record sheet. The present invention is characterized in that the driving means drives each of said needles between a first at-rest position (a) at which said electrode charge is insufficient to separate the ink particles from a needle, and a second printing position (b) intermediate between said record sheet and said first position, whereat ink particles are separated from the needle and impinge upon the record sheet.

Each of said needles may have an end portion which is tapered towards its extremity. A positive voltage may be applied to said electrode while said needles are grounded.

A bimorph may be used as the driving source.

One embodiment of the invention is characterized by an auxiliary magnetic ink attracting coil, a pair of opposed magnetic pole plates magnetically coupled to said magnetic ink attracting coil and defining therebetween a slit located adjacent ends of said needles, said magnetic pole plates having end portions thereof dipped in magnetic ink such that they may attract the magnetic ink by a magnetic force to form a layer of the magnetic ink in said slit thereby to cause the magnetic ink to adhere to the ends of said needles.

Following is a description by way of example only and with reference to the accompanying drawings of methods of carrying the invention into effect.

In the drawings:

Figure 1 is a perspective view, partly broken, illustrating a first embodiment of the present invention;

Figure 2 is a perspective view of a printing head and an electrode;

Figure 3 is a vertical sectional side elevational view of the printing head and the electrode;

Figure 4 is a front elevational view of the printing head and the electrode;

Figure 5 is a transverse sectional view of a needle hole;

Figures 6(a) and 6(b) are side elevational views illustrating actuation of a needle;

Figures 7(a), 7(b) and 7(c) are plan views of an end portion of a needle showing an ink drop being flown;

Figures 8(a), 8(b) and 8(c) are plan views illustrating different shapes of an end of a needle;

Figure 9 is a plan view of an end portion of a needle illustrating an ink drop being flown when a needle having a flat end is used;

Figures 10(a) and 10(b) are side elevational views illustrating a second embodiment of the invention in which a bimorph is used for a driving source for a needle; and

Figure 11 is a perspective view of a printing head illustrating a third embodiment of the invention.

In a conventional dot printer, a plurality of needles are selectively actuated to impact either directly upon pressure sensitive paper wrapped around a platen or indirectly via an ink ribbon upon ordinary paper. However, such a conventional dot printer which may be of either type has the defect that a loud noise results from the needles at the moment of impact.

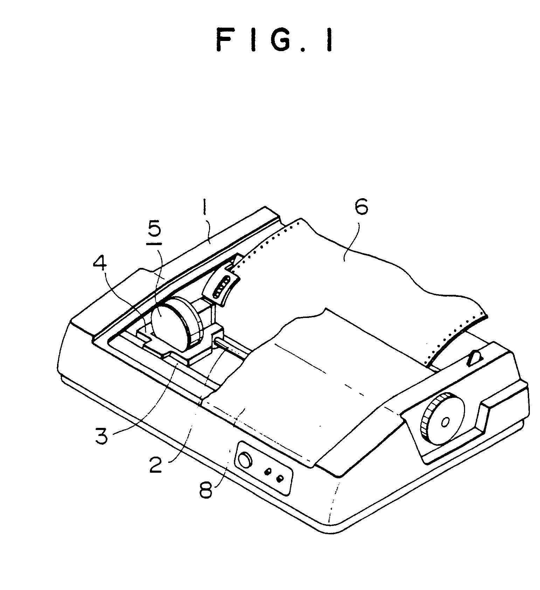

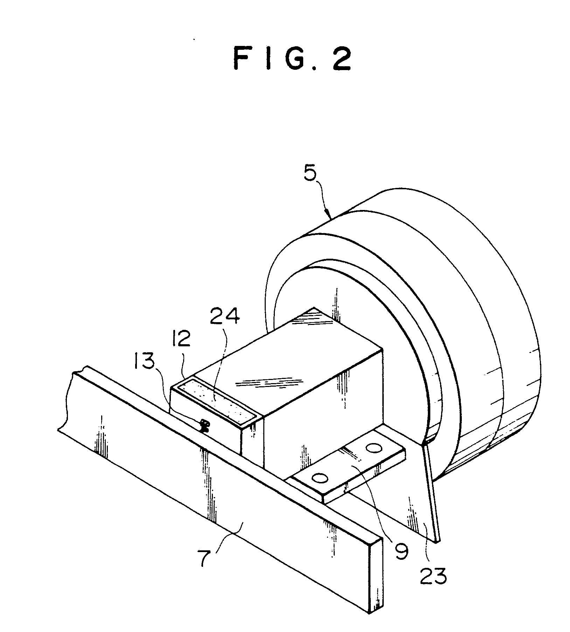

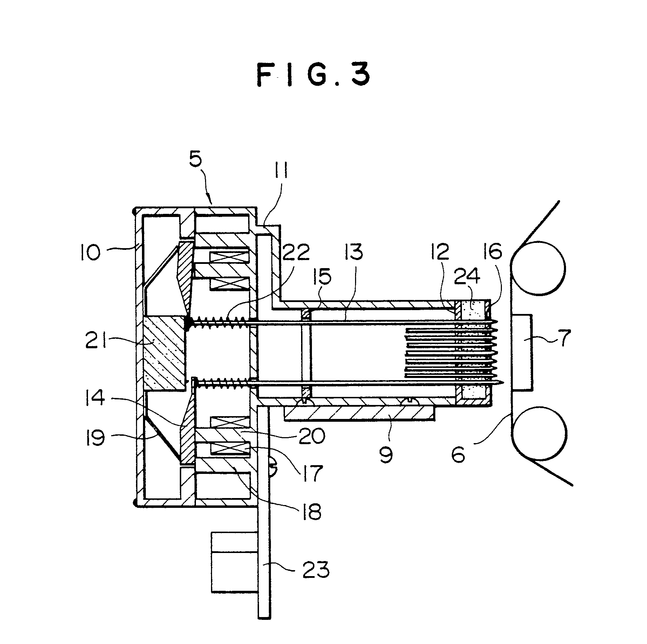

Thus, recently a system has been proposed (EP—A—0121242) (EPC Article 54(3)) wherein a pair of magnetic poles are located in opposing relationship to each other on opposite sides of ends of a plurality of needles and are partially dipped in magnetic ink so as to attract magnetic ink with a magnetic force to form a layer of the magnetic ink between the two magnetic poles whereby the ends of the needles are contacted with record paper to effect printing. This system has some effect in reducing noise since the printing pressure on to the record paper is relatively low. However, in this system, noise is still produced since needles are directly contacted with the record paper, and besides the ends of the needles may possibly suffer damage such as abrasion or bending. Accordingly, due to the fact that the diameter cannot be made very small in order to keep a predetermined strength, there is a limit to any increase in the density of dots, resulting in difficulty to draw characters, figures and so on of a high resolution. A first embodiment of the present invention will be described with reference to Figures 1 to 9. A carrier shaft 2 and a guide shaft 3 are provided within a housing 1 and support a carrier 4 for sliding movement thereon. A printing head 5 is secured to the carrier 4. An electrode 7 is located in opposing relationship to the printing head 5 via record paper 6. A cover 8, not entirely shown, for covering the print head 5 and so on is located on the top of the housing 1.

Now, description will be given of the printing head 5. The printing head 5 is mounted on the carrier 4 by way of a head mounting member 9 and has a casing including a rear cover 10, a guide section 11 and an ink tank 12. A plurality of needles 13, an actuating mechanism for the needles 14, and so on, are held in the housing of the printing head 5.

A gap between ends of the needles 13 and the electrode 7 is adjusted to be from 0.5 to 1.5 mm, and preferably to 1.0 mm, for a non-printing condition and from 0.2 to 0.8 mm, and preferably to 0.5 mm, for a printing condition.

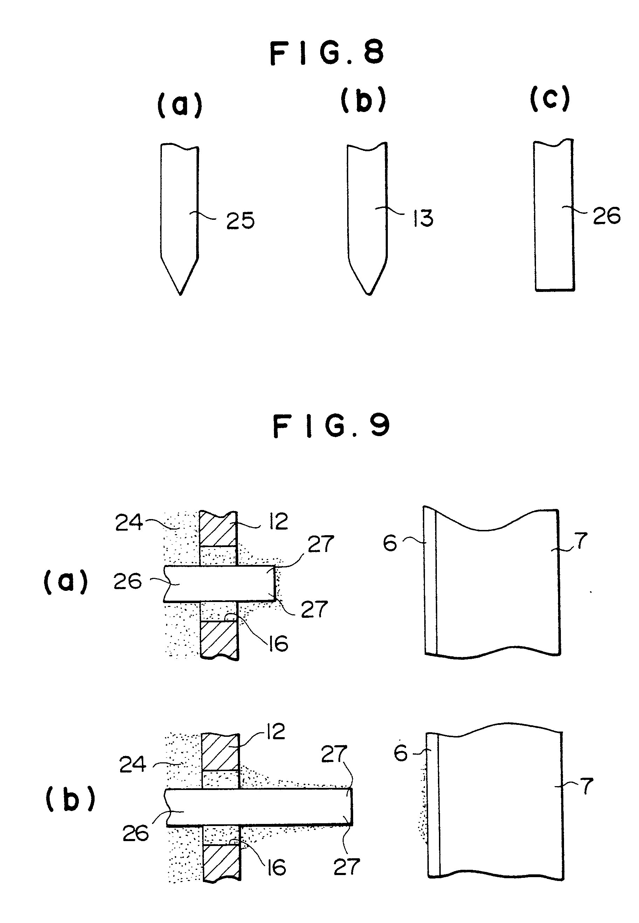

The needles 13 have rearward ends securely fixed to angularly arranged armatures 14 and intermediate portions guided by a needle guide 15 while forward end portions thereof extend through needle holes 16 formed in the ink tank 12. The forward ends of the needles 13 are tapered forwardly as seen in Figure 8(b).

The actuating mechanism for actuating the needles 13 includes the armature 14, exciting coils 17 and other members provided within the printing head 5. In particular, each of the armatures 14 is held between a yoke 18 and a holding spring 19 for pivotal motion between an iron core 20 of the exciting coil 17 and a stopper element 21. Accordingly, pivotal motion of the armature 14 will cause a reciprocating motion of the needle 13, and hence associated members or elements are located and dimensioned to allow the needle 13 to reciprocate within an appropriate range from an appropriate position. A needle spring 22 surrounds and extends along a rear portion of the needle 13 and constantly exerts a force to press the armature 14 against the stopper element 21. Further, the printing head 5 has mounted thereon a head power supply pw plate 23 for delivering an electric current to the exciting coils 17.

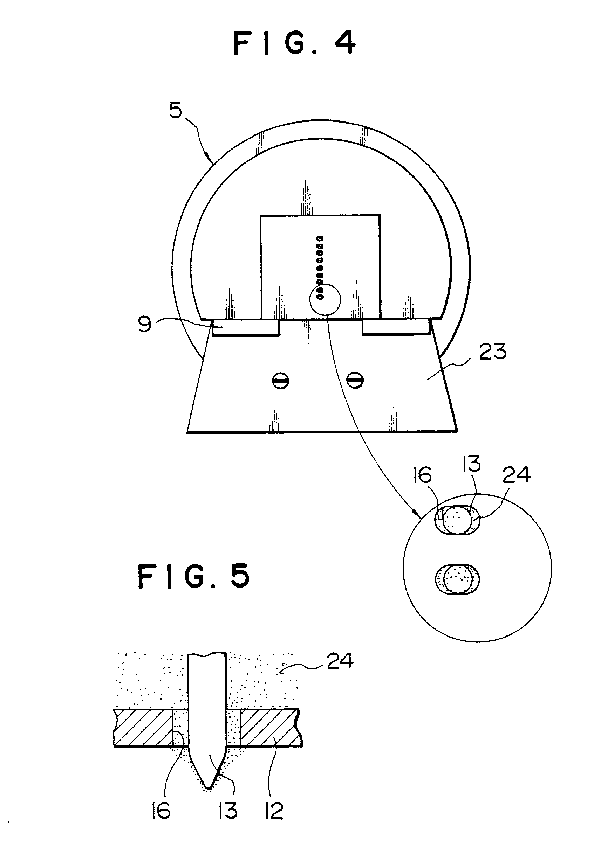

The needle hole 16 formed in the ink tank 12 has a horizontally elongated elliptical shape as shown in Figure 4 and is dimensioned such that ink 24 is held adheres to an end of the needle 13 by suitable surface tension as illustrated in Figure 5. The ink 24 may be oil ink which has a viscosity of lower tahn 20 cp, a surface tension of 10 to 30 dyne/cm, preferably of 25 dyne/cm, and a specific resistance of $10^6$ to $10^{11}$ .cm, and preferably $10^8$ .cm.

Upon printing, a voltage or 1500 to 2500 volts and preferably of 1800 to 2000 volts, is applied to the electrode 7 while needle 13 side elements including the armatures 14, and so on, are grounded. In order that spark discharge does not appear between the electrode 7 and the ends of the needles 13, the opposing electrode 7 is provided with insulation treatment.

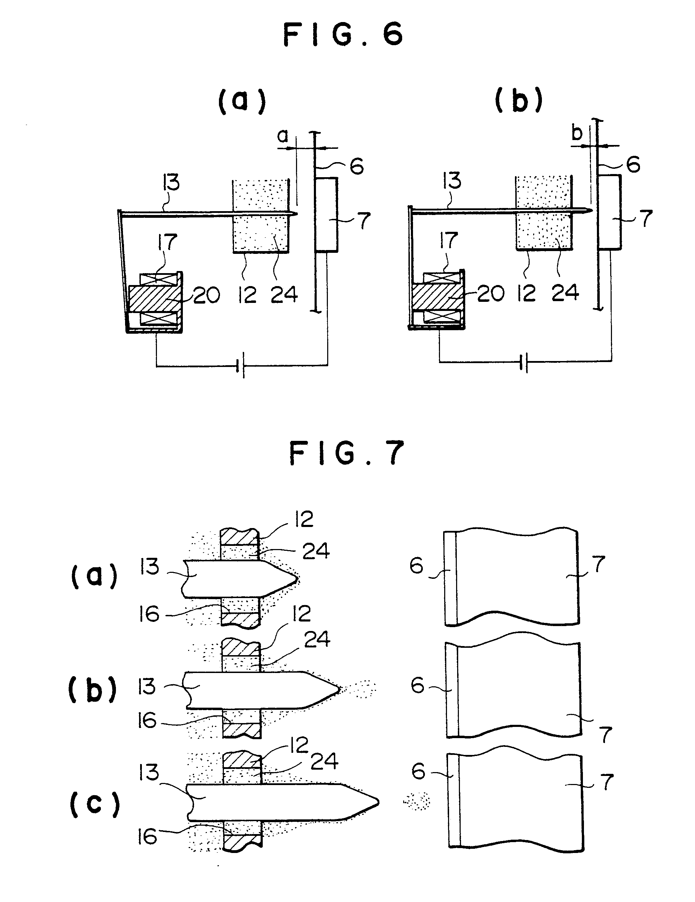

With this construction, dots are formed without contact of the needles 13 with the record paper 6. In particular, between the electrode 7 and the end of each of the needles 13, an electrostatic field is produced by a voltage applied therebetween, and hence the ink 24 sticking to the end of the needle 13 is subject to a Coulomb force to pull the ink 24 towards the electrode 7. Thus, when the needle 13 is moved from a normal position providing a distance a from the end of the needle 13 to the record paper 6 to a printing position providing a different distance b, the ink 24 flies as seen in Figures 6(a) and 6(b) and Figures 7(a), 7(b) and 7(c). In other words, in the position providing the distance a, the force to stick the ink 24 to the needle 13 is greater than the Coulomb force to pull the ink 24 to the electrode 7, and hence the ink 24 is held sticking to the needle 13. On the other hand, in the position providing the distance b, the Coulomb force is greater than the holding force, and hence the ink 24 sticking to the needle 13 is caused to fly towards the electrode 7. The ink 24 thus projected is transferred to the record paper 6 covering the electrode 7 to form a dot. In this way, the needles 13 are selectively actuated to effect printing of a character, a figure or the like with a combination of dots thus formed.

Meanwhile, such movement of the needle 13 as described above is produced by pivotal movement of the armature 14. In particular, the head power supply pw plate 23 selectively energizes the exciting coils 17 to attract the armatures 14 thereto, resulting in movement of the corresponding needles 13. Then, when the exciting coils 17 are deenergized, the armatures 14 are returned to their respective initial positions by the associated needle springs 23.

In the meantime, while the end of each needle 13 of the embodiment is tapered toward its extremity, the extremity thereof may be pointed such as of a needle 25 shown in Figure 8(a). Such a tapered configuration is provided in order to hold the uniformity of dots in shape, size and the like. In particular, a tapered end toward an extremity will allow concentration of electrostatic charges thereto, and hence the holding force to the ink 24 will be reduced, resulting in ready separation and also in stabilisation of the flying direction of the ink 24. Accordingly, the quantity, direction and so on of the flying ink 24 is stabilised, and hence the uniformity of dots is maintained. In case of a needle having no tapered end such as a needle 26 shown in Figure 8(c), however electrostatic charges are concentrated at edge portions 27 of the needle as illustrated in Figures 9(a) and 9(b), and hence ink will be concentrated to the edge portions 27. Thus, it is difficult to maintain the uniformity of dots.

Again, upon printing, a plus voltage is applied to the electrode 7 while the needles 13 are grounded. The reason will now be described. In particular, the exciting coils 17 for reciprocating the needles 13 are disposed adjacent the needles 13 in the printing head 5. A voltage signal of a low voltage (about 12 volts) is applied to the exciting coils 17 to actuate the armatures 14 to reciprocate the needles 13. Now, if a high voltage (about 1.8kV) is applied to the needles 13, then a very high potential difference will appear between the needles 13 and the exciting coils 17 and armatures 14 which are located very near to the needles 13. Thus, in order to compensate for such a high potential difference, new and special insulation must be provided. Such provision of insulation is difficult within the printing head 5 which is crowded with such active elements. Besides, with regard to safety, if insulation is not provided perfectly between the needles and a head body, it will cause the possibility of an electric shock and hence is dangerous. In addition, introduction of a high voltage to the needles 13 is also difficult since the head body moves rightwardly and leftwardly across the machine, and hence it is also necessary to take a new countermeasure therefor.

From this reason, the needles 13 are grounded, thereby attaining the assurance of a drive signal voltage to the actuating exciting coils 17, the safety of the head, and the simplification of the head.

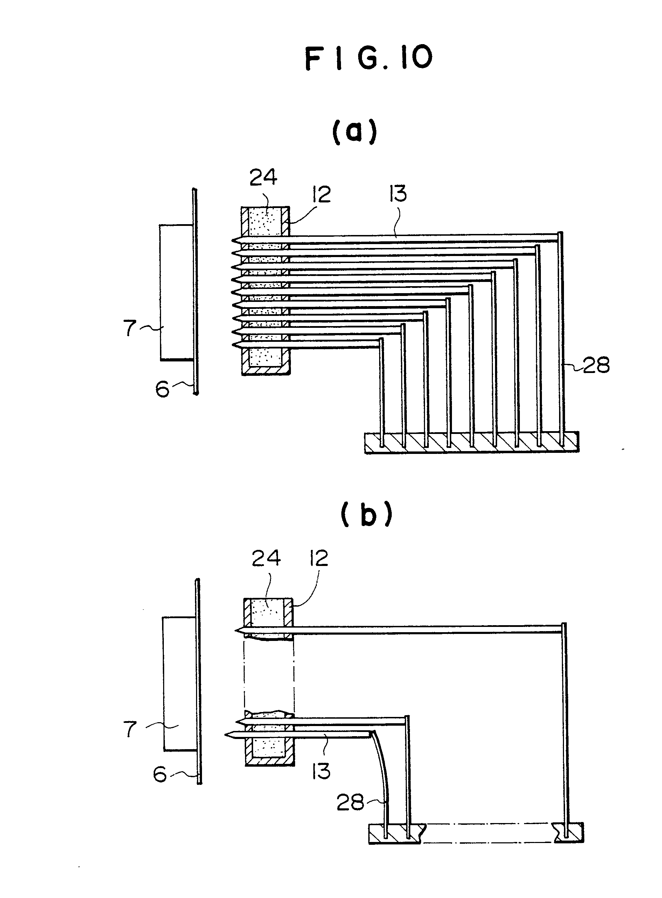

A second embodiment of the present invention will now be described with reference to Figure 10. In Figure 10, like parts or elements are designated by like reference numerals to those of the first embodiment (this also applies to a following third embodiment). This embodiment employs a bimorph 28 to drive needles 13. In particular, the bimorph 28 is fixed to a rear end of the needle 13 such that deformation of the bimorph 28 will drive the needle 13 to effect reciprocating movement. By this arrangement, no noise will be caused by the driving source for the needle 13, allowing attainment of a printer which produces a very low noise. It is to be noted here that the bimorph 28 is a member in the form of a plate obtained by putting two plate elements one on the other and integrating the same with each other and has a character that it is curved in different directions depending upon the polarity of voltages applied to the elements, that is depending upon the polarity of voltages applied, the bimorph 28 is deformed such that one of the elements is elongated while the other is contracted.

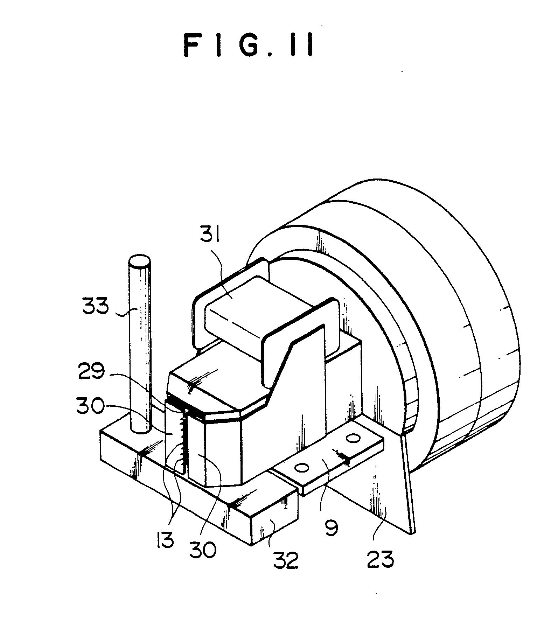

A third embodiment of the present invention will be described below with reference to Figure 11. In this embodiment, a pair of magnetic plates 30 are located in opposing relationship to each other to define therebetween a slit 29 in which ends of needles 13 are located. The magnetic plates 30 are coupled to opposite poles of a magnetic ink attracting coil 31. Lower ends of the magnetic plates 30 extend into a magnetic ink tank 32 and are thus dipped in magnetic ink (not shown) contained in the magnetic ink tank 32.

It is to be noted that a cartridge 33 containing magnetic ink therein is removably mounted on the magnetic ink tank 32, and when magnetic ink within the magnetic ink tank 32 is used up, then magnetic ink can be supplemented only by exchanging the cartridge for another new cartridge. In this arrangement, if the magnetic ink attracting coil 31 is energized, magnetic fluxes are produced between the magnetic plates 30 extending into the magnetic ink tank 32 so that magnetic ink is attracted up into the slit 29. Accordingly, magnetic ink adheres to the ends of the needles 13.

## Claims

1. An ink dot printer comprising a plurality of needles (13), driving means (14, 28) for selectively acting upon each of said needles, and an electrode (7) located in opposed relationship to the end of said needles and adapted to be overlaid by a record sheet (6), said electrode being charged to attract ink particles (24) from said needles to said record sheet, characterized in that the driving means (14, 28) drives each of said needles (13) between a first at-rest position (a) at which said electrode charge is insufficient to separate the ink particles from a needle, and a second printing position (b) intermediate between said record sheet and said first position, whereat ink particles are separated from needle (13) and impinge upon the record sheet (6).

2. A printer according to claim 1 characterized in that the gap between the needles (13) in their at-rest position (a) and the adjacent electrode surface (7) is 0.5 to 1.5 mm, and the gap between the needles (13) in their second printing position (b) and the adjacent electrode surface (7) is 0.2 to 0.8 mm.

3. A printer according to either of claims 1 or 2 characterized in that the ends of the needles are tapered.

4. A printer according to any preceding claim characterized in that a positive voltage is applied to said electrode (7) while said needles (13) are grounded.

5. A printer according to any preceding claim characterized in that the driving means is a bimorph (28) or a coil and armature assembly (14, 17).

6. A printer as claimed in any preceding claim characterized by an auxiliary magnetic ink attracting coil (31), a pair of opposed magnetic pole plates (30) magnetically coupled to said magnetic ink attracting coil (31) and defining therebetween a slit (29) located adjacent ends of said needles (13), said magnetic pole plates having end portions thereof dipped in use in the magnetic ink to attract the magnetic ink by magnetic force to form a layer of the magnetic ink in said slit thereby to cause the magnetic ink to adhere to the ends of said needles.

## Patentansprüche

1. Tintenstrahldrucker, enthaltend mehrere Nadeln (13), Antriebseinrichtungen (14, 28) zum selektiven Einwirken auf jede der genannten Nadeln, und eine Elektrode (7), die dem Ende der Nadeln gegenüberliegend angeordnet ist und dazu eingerichtet ist, von einem Aufzeichnungsblatt (6) abgedeckt zu werden, wobei die Elektrode geladen ist, um Tintenpartikel (24) von den genannten Nadeln auf das Aufzeichnungsblatt anzuziehen, dadurch gekennzeichnet, daß die Antriebseinrichtung (14, 28) eine jede der genannten Nadeln (13) zwischen einer ersten Ruhestellung (a), bei der die Elektrodenladung unzureichend ist, um Tintenpartikel von einer Nadel zu lösen, und einer zweiten Druckstellung (b) zwischen dem Aufzeichnungsblatt und der ersten Stellung bewegt, bei der Tintenpartikel von der Nadel (13) gelöst werden und auf das Aufzeichnungsblatt (6) auftreffen.

2. Drucker nach Anspruch 1, dadurch gekennzeichnet, daß der Zwischenraum zwischen den Nadeln (13) in ihrer Ruhestellung (a) und der benachbarten Elektrodenoberfläche (7) zwischen 0,5 und 1,5 mm beträgt, und daß der Zwischenraum zwischen den Nadeln (13) in ihrer zweiten Druckstellung (b) und der benachbarten Elektrodenfläche (7) zwischen 0,2 und 0,8 mm liegt.

3. Drucker nach Anspruch 1 oder 2, dadurch gekennzeichnet, daß die Enden der Nadeln angespitzt sind.

4. Drucker nach einem der vorhergehenden Ansprüche, dadurch gekennzeichnet, daß eine positive Spannung der Elektrode (7) zugeführt ist, während die Nadeln (13) geerdet sind.

5. Drucker nach einem der vorhergehenden Ansprüche, dadurch gekennzeichnet, daß die Antriebseinrichtung ein Bimorph (28) oder eine Spulen- und Kernanordnung (14, 17) ist.

6. Drucker nach einem der vorhergehenden Ansprüche, gekennzeichnet durch eine zusätzliche Magnettintenanziehungsspule (31), ein Paar gegenüberstehender magnetischer Polplatten (30), die magnetisch mit der Magnettintenanziehungsspule (31) verbunden sind und zwischen sich einen Schlitz (29) ausbilden, der den Enden der Nadeln (13) benachbart angeordnet ist, wobei die magnetischen Polplatten jeweils Endabschnitte aufweisen, die im Gebrauch in die Magnettinte eingetaucht sind, um die Magnettinte durch magnetische Kraft anzuziehen, um eine Schicht aus magnetischer Tinte in dem Schlitz auszubilden, um dadurch zu bewirken, daß die Magnettinte an den Enden der genannten Nadeln anhaftet.

**Revendications**

1. Une imprimante par points d'encre comprenant un ensemble d'aiguilles (13), des moyens d'entraînement (14, 28) pour agir sélectivement sur chacune desdites aiguilles, et une électrode (7) disposée en relation d'opposition avec l'extrémité desdites aiguilles et adaptée à être recouverte par une feuille d'enregistrement (6), ladite électrode étant chargée afin d'attirer des particules d'encre (24) provenant desdites aiguilles vers ladite feuille d'enregistrement, caractérisée en ce que les moyens d'entraînement (14, 28) entraînent chacune desdites aiguilles (13) entre une première position de repos (a) dans laquelle ladite charge d'électrodes est insuffisante pour écarter les particules d'encre d'une aiguille, et une seconde position d'impression (b) intermédiaire entre ladite feuille d'enregistrement et ladite première position, dans laquelle des particules d'encre sont écartées de l'aiguille (13) et viennent frapper la feuille d'enregistrement (6).

2. Une imprimante selon la revendication 1, caractérisée en ce que l'écart entre les aiguilles (13) dans leur position de repos (a) et la surface (7) de l'électrode adjacente est de 0,5 à 1,5 mm, et l'écart entre les aiguilles (13) dans leur seconde position d'impression (b) et la surface (7) de l'électrode adjacente est de 0,2 à 0,8 mm.

3. Une imprimante selon l'une ou l'autre des revendications 1 ou 2, caractérisée en ce que les extrémités des aiguilles sont pointues.

4. Une imprimante selon l'une quelconque des revendications précédentes, caractérisée en ce qu'une tension positive est appliquée à ladite électrode (7) tandis que lesdites aiguilles (13) sont mises à la masse.

5. Une imprimante selon l'une quelconque des revendications précédentes, caractérisée en ce que les moyens d'entraînement sont constitués par un dispositif dimorphe (28) ou par un ensemble d'enroulements et d'armature (14, 17).

6. Une imprimante selon l'une quelconque des revendications précédentes, caractérisée par un enroulement auxiliaire (31) attirant l'encre magnétique, deux plaques polaires magnétiques opposées (30) magnétiquement accouplées audit enroulement (31) attirant l'encre magnétique et définissant entre elles une fente (29) située à côté des extrémités desdites aiguilles (13), lesdites plaques polaires magnétiques ayant leur portion d'extrémité plongée en service dans l'encre magnétique afin d'attirer l'encre magnétique par une force magnétique pour former une couche d'encre magnétique dans ladite fente et faire ainsi adhérer l'encre magnétique aux extrémités desdites aiguilles.

# F I G . 1

# FIG. 2

# F I G . 3

# FIG. 4

5

9

23

16 13 24

# FIG. 5

24

16 13 12

# FIG. 6

## (a)

## (b)

# FIG. 7

(a)

(b)

(c)

# F I G. 8

**(a)**       **(b)**       **(c)**

# F I G. 9

# F I G. 10

## (a)

## (b)

7

# F I G. II